**Europäisches Patentamt**

**European Patent Office**

**Office européen des brevets**

(11) Veröffentlichungsnummer: **0 429 936 A2**

## (12) EUROPÄISCHE PATENTANMELDUNG

(21) Anmeldenummer: 90121603.6

(22) Anmeldetag: 12.11.90

(51) Int. Cl.5: **B63H 9/06, B32B 27/36**

(30) Priorität: 20.11.89 DE 8913675 U

(43) Veröffentlichungstag der Anmeldung:
05.06.91 Patentblatt 91/23

(84) Benannte Vertragsstaaten:
**AT BE CH DE DK ES FR GB IT LI LU NL
Patentblatt**

(71) Anmelder: **HOECHST AKTIENGESELLSCHAFT
Postfach 80 03 20
W-6230 Frankfurt am Main 80(DE)**

(72) Erfinder: **Beer, Ekkehard
Liebigstrasse 4
W-6208 Bad Schwalbach(DE)**
Erfinder: **Hessberger, Harald, Dr.
In den Dörrwiesen 6
W-6270 Idstein(DE)**

(54) **Farbiges transparentes Windsegel aus Polyesterfolie.**

(57) Die Erfindung betrifft ein Windsegel mit einer transparenten Folie aus mehreren biaxial streckorientierten und hitzefixierten Polyesterfolien, die mit Hilfe von Siegelschichten oder Klebstoffschichten miteinander verbunden sind. Die transparente Folie kann zusätzlich einen Überzug enthaltend ein Bindemittel und Farbstoff tragen.

EP 0 429 936 A2

# FARBIGES TRANSPARENTES WINDSEGEL AUS POLYESTERFOLIE

Die vorliegende Erfindung betrifft ein farbiges Windsegel mit einer Folie aus thermoplastischem Kunststoff.

Windsegel der gattungsgemäßen Art werden üblicherweise für Segelboote verwendet oder in noch größerem Umfang für Surfbretter. Aus der EP-A-0 034 189 und der EP-A-0 227 922 bekannte Segel weisen eine Gewebeschicht auf und eine mit dieser verbundene Schicht aus Kunststoff. Nachteiligerweise behindern diese Segel aber die Sicht ihrer Benutzer, jedenfalls in der dem Segel zugewandten Blickrichtung.

Daher ging man dazu über, Segel auf Basis transparenter Kunststoffolien herzustellen, sogenannte Monofilmsegel. Allerdings hat sich gezeigt, daß diese Monofilmsegel infolge der extremen Biegebeanspruchung beim Flattern der Segel im Wind stark zum Verschleiß neigen, weil die Kunststoffschicht bricht.

Aufgabe der Erfindung war es, ein großflächig transparentes Windsegel zu schaffen, das eine verbesserte mechanische Festigkeit bei lang anhaltender Biegebeanspruchung besitzt.

Gelöst wird diese Aufgabe durch ein Windsegel der eingangs genannten Gattung, dessen Kennzeichenmerkmal darin besteht, daß die Folie eine biaxial streckorientierte und hitzefixierte Mehrschichtfolie aus Polyester ist mit zwischen den einzelnen Schichten angeordneten Siegelschichten oder Klebstoffschichten enthaltend wasserfesten Klebstoff.

Als Polyester sind Polykondensate aus Terephthalsäure, Isophthalsäure oder 2,6-Naphthalindicarbonsäure mit Glykolen mit 2 bis 10 C-Atomen geeignet. Derartige Polyester sind z. B. Polyethylenterephthalat, Polybutylenterephthalat, Poly-1,4-cyclohexylendimethylenterephthalat, Polyethylen-2,6-naphthalindicarboxylat oder Polyethylen-P-hydroxybenzoat.

Die biaxial streckorientierte Mehrschichtfolie aus dem Polyester weist vorzugsweise eine Gesamtdicke im Bereich von 10 bis 300 $\mu$m auf, vorzugsweise von 12 bis 200 $\mu$m. Die einzelnen Schichten der Mehrschichtfolie weisen eine Dicke von 5 bis 190 $\mu$m, vorzugsweise von 12 bis 100 $\mu$m, auf. Die einzelnen Schichten der Folie werden nach der Streckorientierung zur Verbesserung ihrer Dimensionsstabilität einer Hitzefixierung unterworfen.

Zusätzlich können die hitzefixierten Folien zur Verbesserung ihrer Hafteigenschaften gegenüber dem aufzubringenden Klebstoff an ihren Oberflächen mit einer elektrischen Coronasprühentladung behandelt werden. Durch diese Behandlung wird auch die Bedruckbarkeit der Folie verbessert. Zur Coronabehandlung wird die Folie zwischen geeigneten Elektroden hindurchgeführt, die an eine hochfrequente Wechselspannung von etwa 10 000 V und 10 000 Hz angeschlossen sind.

Als Siegelschichten werden erfindungsgemäß üblicherweise Heißsiegelschichten eingesetzt. Heißsiegelschichten für Polyesterfolien sind bekannt und enthalten üblicherweise einen Copolyester aus Ethylenterephthalat- und Ethylenisophthalateinheiten in einem Gewichtsverhältnis im Bereich von etwa 80 zu 20 bis 60 zu 40. Die Heißsiegelschichten können durch Coextrusion mit den Polyesterfolien hergestellt werden oder durch nachträgliches Aufextrudieren.

Als Klebstoffe eignen sich alle wasserfesten Klebstoffe, vorzugsweise geeignet ist ein lösemittelfreier Zweikomponentenkleber auf Basis von Polyurethan, der auch eine gute Witterungsbeständigkeit besitzt. Die Klebstoffschichten besitzen eine Dicke im Bereich von 0,5 bis 5 $\mu$m, vorzugsweise von 1 bis 2,5 $\mu$m.

Das erfindungsgemäße Windsegel, dessen Trägerfolie aus mehrschichtiger Polyesterfolie vorstehend ausführlich beschrieben ist, kann zur Verbesserung seiner optischen Eigenschaften zusätzlich wenigstens einen, vorzugsweise beidseitig einen Überzug enthaltend ein Bindemittel und gegebenenfalls einen Farbstoff tragen.

Der Überzug wird nach einem üblichen Auftragsverfahren aufgebracht. Er kann aufextrudiert, aufgedruckt, aufgesprüht, aufgegossen oder aufgesputtert werden.

Als Bindemittel eignen sich Mischpolymere aus Acrylaten und Methacrylaten, z. B. aus Ethylacrylat und Methyl methacrylat oder Polyvinylacetat oder ähnliche. Die Bindemittel können zur Verbesserung ihrer Dauerbeständigkeit zusätzlich geeignete Mengen an Vernetzungsmittel enthalten. Als Farbstoffe eignen sich solche Farbstoffe, die die Transparenz der Folie möglichst wenig beeinträchtigen. Die Farbstoffe werden mit dem Bindemittel in schmelzflüssiger Form oder in Lösung homogen vermischt, und die Mischung wird dann nach einem der bereits genannten Verfahren auf die Folie aufgebracht.

Die Dicke des Überzugs oder der Überzüge liegt erfindungsgemäß im Bereich von 0,1 bis 5 $\mu$m, vorzugsweise von 0,5 bis 3 $\mu$m.

Überraschenderweise zeigt das erfindungsgemäße Windsegel sehr gute Transparenz und gleichzeitig ausgezeichnete Farbechtheit, insbesondere bei seinem bestimmungsgemäßen Einsatz unter lang andauernder Einwirkung von Sonnenstrahlung. Außerdem zeigt es auch nach längerer Benutzung und bei Flattern im Wind keine Bruchstellen des Kunststoffs.

Die Erfindung wird nachfolgend durch eine beispielhafte Zeichnung näher erläutert.

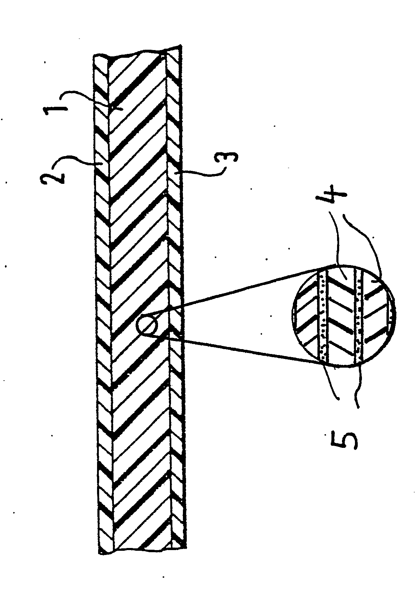

Die einzige Figur zeigt einen senkrechten Schnitt durch ein erfindungsgemäßes Windsegel in seitlicher Ansicht. Auf der Darstellung ist die Polyesterfolie 1 erkennbar, die beidseitig Überzüge 2 und 3 trägt. Die Polyesterfolie 1 ist dabei aus mehreren Schichten Einzelfolie 4 und zwi schen diesen angeordneten Klebstoffschichten oder Heißsiegelschichten 5 aufgebaut.

**Ansprüche**

1. Farbiges Windsegel mit einer Folie aus thermoplastischem Kunststoff, dadurch gekennzeichnet, daß die Folie eine biaxial streckorientierte und hitzefixierte Mehrschichtfolie aus Polyester ist mit gegebenenfalls zwischen den einzelnen Schichten angeordneten Siegelschichten oder Klebstoffschichten enthaltend wasserfesten Klebstoff.

2. Windsegel nach Anspruch 1, dadurch gekennzeichnet, daß der Polyester Polyethylenterephthalat ist.

3. Windsegel nach Anspruch 1 oder 2, dadurch gekennzeichnet, daß die biaxial streckorientierte Mehrschichtfolie aus Polyester eine Gesamtdicke im Bereich von 10 bis 300 $\mu$m aufweist, vorzugsweise von 12 bis 200 $\mu$m.

4. Windsegel nach einem der Ansprüche 1 bis 3, dadurch gekennzeichnet, daß die einzelnen Schichten der Mehrschichtfolie eine Dicke von 5 bis 190 $\mu$m, vorzugsweise von 12 bis 100 $\mu$m, aufweisen.

5. Windsegel nach einem der Ansprüche 1 bis 4, dadurch gekennzeichnet, daß die Siegelschichten Heißsiegelschichten sind enthaltend einen Copolyester mit Einheiten aus Ethylenterephthalat und Ethylenisophthalat in einem Gewichtsverhältnis im Bereich von 80 zu 20 bis 60 zu 40.

6. Windsegel nach einem der Ansprüche 1 bis 4, dadurch gekennzeichnet, daß die Klebstoffschichten eine Dicke im Bereich von 0,5 bis 5 $\mu$m, vorzugsweise von 1 bis 2,5 $\mu$m, besitzen, wobei der Klebstoff ein witterungsbeständiger Klebstoff auf Basis von Polyurethan ist.

7. Windsegel nach einem der Ansprüche 1 bis 6, dadurch gekennzeichnet, daß es zusätzlich wenigstens einen, vorzugsweise beidseitig, einen Überzug enthaltend ein Bindemittel und gegebenenfalls einen Farbstoff trägt.

8. Windsegel nach Anspruch 7, dadurch gekennzeichnet, daß das Bindemittel ein Mischpolymeres aus Acrylaten und Methacrylaten, z. B. aus Ethylacrylat und Methylmethacrylat, oder Polyvinylacetat enthält.

9. Windsegel nach Anspruch 7 oder 8, dadurch gekennzeichnet, daß die Dicke des Überzugs oder der Überzüge im Bereich von 0,1 bis 5 $\mu$m, vorzugsweise von 0,5 bis 3 $\mu$m, liegt.

10. Verwendung eines Windsegels nach einem der Ansprüche 1 bis 9 zum Antrieb von Surfbrettern.